# EUROPÄISCHE PATENTSCHRIFT

(11) **EP 1 046 333 B1**
(45) Veröffentlichungstag und Bekanntmachung des Hinweises auf die Patenterteilung: **17.09.2003**
(21) Anmeldenummer: 00108114.0
(22) Anmeldetag: 13.04.2000
(51) Int. Cl.: A01D 57/04, A01F 29/10

(54) **Erntemaschine**
Harvesting machine
Machine de récolte

(30) Priorität: 23.04.1999 DE 19918552
(43) Veröffentlichungstag der Anmeldung: 25.10.2000
(73) Patentinhaber: DEERE & COMPANY, Moline, Illinois 61265-8098 (US)
(72) Erfinder: Clauss, Steffen, 66509 Rieschweiler-Mühlbach (DE)
(74) Vertreter: Holst, Sönke, Dr.

(56) Entgegenhaltungen:
- EP-A- 0 139 264
- EP-A- 0 403 899
- EP-A- 0 993 766
- DE-A- 3 708 550
- FR-A- 2 201 819

## Beschreibung

Die Erfindung betrifft eine Erntemaschine, mit einer Erntegutaufnahmeeinrichtung, die zur Beseitigung einer Verstopfung und/oder eingedrungener unerwünschter Materialien reversierbar ist, und die mit einem Zuführelement ausgestattet ist, dessen Position zwischen einer Betriebsstellung und einer Außerbetriebsstellung veränderbar ist.

Bei Mähdreschern, Feldhäckslern und anderen landwirtschaftlichen Erntemaschinen dienen unterschiedliche Vorsätze, beispielsweise Pick-ups oder Schneidwerke, zur Aufnahme der Erntematerialien. An der Pick-up angebrachte Niederhalter in verschiedenen Ausführungsformen oder die an einem Getreideschneidwerk eines Mähdreschers angebrachte Haspel dienen dem besseren Einzug und somit der gleichmäßigen Verarbeitung des Erntegutes. Feldhäcksler sind im Stand der Technik in der Regel gegen die Beschädigung oder Zerstörung der Messertrommel oder anderer wichtiger Bauteile durch Metalldetektoren geschützt. Wenn durch das Auslösen des Metalldetektors ein Reversieren der Erntegutaufnahmeeinrichtung notwendig wird, muß der Niederhalter angehoben werden, um ein Auswerfen des Erntegutes nicht zu behindern. Bei (unerwartet) hohem Erntegutaufkommen kann es insbesondere bei voller Ausnutzung der Leistungsfähigkeit der Maschine zu Verstopfungen der Erntegutaufnahmeeinrichtung kommen. Auch in diesem Fall ist ein Reversieren der Erntegutaufnahmeeinrichtung notwendig, was ein Anheben der Haspel eines Mähdreschers oder des Niederhalters einer Pick-up erfordert. Das Anheben muß durch den Bediener zweckmäßigerweise vor dem Reversieren oder gleichzeitig mit Beginn des Reversiervorganges erfolgen. In der Regel sind getrennte Bedienungeinrichtungen für das Reversieren und das Anheben der Haspel oder des Niederhalters vorgesehen, was die Bedienung relativ umständlich macht.

In der EP 403 899 A wird vorgeschlagen, ein Reversiergetriebe und eine Einrichtung zum Entfernen eines Niederhalters aus dem Wirkungsbereich einer Aufsammeltrommel durch einen gemeinsamen Wirkungsbereich einer Aufsammeltrommel durch einen gemeinsamen Schalter zu steuern. Das Anheben des Niederhalters wird aber nicht in allen Fällen, in denen reversiert wird, wünschenswert sein. Da der Niederhalter erst mit der Aktivierung des Reversiergetriebes angehoben wird, ist außerdem denkbar, daß sich Erntegut zu Anfang des Reversierbetriebs daran verklemmt. Dieses Problem wäre nicht zu befürchten, wenn der Niederhalter schon vorher angehoben würde, was aber mit dieser Steuerung nicht möglich ist.

Die der Erfindung zugrunde liegende Aufgabe wird darin gesehen, die bekannten Erntemaschinen dahingehend zu verbessern, daß ihre Bedienung und Funktionssicherheit verbessert wird.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird mittels einer geeigneten Nachweiseinrichtung untersucht, ob eine Verstopfung der Erntegutaufnahmeeinrichtung vorliegt. Alternativ oder zusätzlich prüft die Nachweiseinrichtung, ob unerwünschte Materialien in die Erntegutaufnahmeeinrichtung eingedrungen sind. Die Nachweiseinrichtung ist mit einer Steuerung verbunden, welche die Position eines Zuführelementes-insbesondere einer Haspel oder eines Niederhalters - der Erntegutaufnahmeeinrichtung steuert. Stellt die Nachweiseinrichtung fest, daß eine Verstopfung vorliegt oder unerwünschte Materialien in die Erntegutaufnahmeeinrichtung eingedrungen sind, kann das Zuführelement durch die Steuerung selbsttätig in die Außerbetriebsstellung verbracht werden, die in der Regel eine zum Auswerfen aufgenommenen Materials geeignete Position ist.

Als vorteilhaft ist anzusehen, daß die Bedienungsperson der Erntemaschine nur noch den Reversierbetrieb einzuschalten braucht, um die Verstopfung zu beseitigen bzw. das eingedrungene unerwünschte Material wieder auszuwerfen. Eine separate Betätigung eines Bedienelements für das Verbringen des Zuführelements in die Außerbetriebsstellung ist nicht nötig. Außerdem ist das Zuführelement rechtzeitig, also bereits vor dem Einschalten des Reversierbetriebs, in der Außerbetriebsstellung, so daß ein Verklemmen von Erntegut am Zuführelement nicht zu befürchten ist.

In der Regel ist an der Erntemaschine ein erstes Bedienelement vorhanden, mit dem eine Bedienungsperson die gewünschte Position des Zuführelements wählen, also eingeben kann. Das erste Bedienelement weist somit eine Betriebsposition auf, in der das Zuführelement in seiner Betriebsstellung für normalen Erntebetrieb ist (oder verbracht wird). Außerdem weist das erste Bedienelement eine Außerbetriebsposition auf, in der das Zuführelement in seiner Außerbetriebsstellung ist (oder verbracht wird). Es bietet sich an, das erste Bedienelement mit der Steuerung zu verbinden, und das Zuführelement nicht nur bei Ansprechen der Nachweiseinrichtung in die Außerbetriebsstellung zu verbringen, sondern auch dann, wenn die Bedienungsperson das erste Bedienelement in die Außerbetriebsposition verbringt.

Weiterhin ist denkbar, das erste Bedienelement selbsttätig in seine Außerbetriebsstellung zu verbringen, falls die Nachweiseinrichtung anspricht. Die Bedienungsperson kann somit anhand der Stellung des ersten Bedienelements erkennen, daß das Zuführelement in seiner Außerbetriebsstellung ist (oder in sie verbracht wurde), und entsprechende weitere Schritte unternehmen.

In einer Ausführungsform der Erfindung ist ein Zeitglied vorgesehen, welches ermöglicht, daß die Steuerung das Zuführelement nach dem Ansprechen der Nachweiseinrichtung erst nach Ablauf eines bestimmten Zeitintervalls in die Außerbetriebsstellung verbringt. Der Vorteil liegt darin, daß das Zuführelement nicht für die Bedienungsperson in überraschender Weise unmittelbar nach einer Verstopfung oder der Detektion eines unerwünschten Materials in seine Außerbetriebsstellung verbracht wird, und daß innerhalb des Zeitintervalls noch die Möglichkeit bestehen kann, das Verbringen des Zuführelements in die Außerbetriebsstellung zu blockieren (oder es zu bestätigen). Ein Blockieren kann durch Betätigung eines (insbesondere zweiten) Bedienelements erfolgen, wenn die Bedienungsperson das Verbringen des Zuführelements in die Außerbetriebsstellung nicht für erforderlich hält. In diesem Fall kann das genannte Bedienelement ein spezieller Schalter sein, oder es kann das erste Bedienelement sein, das von der Betriebsposition in die Außerbetriebsposition und zurück in die Betriebsposition verbracht wird. Wird in dieser Ausführungsform das Bedienelement nicht innerhalb des Zeitintervalls betätigt, wird das Zuführorgan in die Außerbetriebsstellung verbracht; anderenfalls bleibt es in der Betriebsstellung. Alternativ ist denkbar, von der Bedienungsperson eine Bestätigung zu verlangen, daß das Zuführelement in die Außerbetriebsstellung verbracht werden soll. Eine derartige Bestätigung kann beispielsweise durch das erste Bedienelement erfolgen (durch Verbringen in die Außerbetriebsposition), oder durch ein anderes Bedienelement, z. B. einen Schalter für den Reversierbetrieb oder einen beliebigen anderen Schalter. Wird in dieser alternativen Ausführungsform das Bedienelement nicht innerhalb des Zeitintervalls betätigt, verbleibt das Zuführelement in der Betriebsstellung; anderenfalls wird es in die Außerbetriebsstellung verbracht.

Die Steuerung kann mit einem Vortriebssensor verbunden und derart eingerichtet sein, daß sie das Zuführorgan bei Ansprechen der Nachweiseinrichtung nur dann in die Außerbetriebsstellung verbringt, falls die Erntemaschine für eine bestimmte Zeitdauer nicht in Vorwärtsrichtung angetrieben wurde, oder nach dem Ablauf der bestimmten Zeitdauer steht. Dazu ist die Steuerung mit einem entsprechenden Sensor zu versehen, der ein Vorantreiben der Erntemaschine nachweist. Das Verbringen der Zuführeinrichtung in die Außerbetriebstellung kann somit durch die Bedienungsperson in Fällen, in denen ein Reversieren unnötig erscheint, einfach durch Weiterfahren unterbunden werden.

Weiterhin ist empfohlen, daß die Steuerung das Zuführorgan selbsttätig nach der Beseitigung einer Verstopfung oder unerwünschten Materials in die Betriebsposition zurückführt, wenn die Erntemaschine in Vorwärtsrichtung bewegt wird. Dazu ist die Steuerung mit einer entsprechenden Einrichtung zum Erkennen des Vorwärtsfahrens zu verbinden. Denkbar wäre auch, das Ende eines Reversiervorganges nachzuweisen und das Zuführelement entsprechend in die Betriebsstellung zu versetzen.

Zum Nachweis einer Verstopfung kann die Menge des eingebrachten Ernteguts durch einen Sensor erfaßt werden, der beispielsweise ein Füllstandssensor ist und die Höhe (und somit Menge) des Ernteguts an einer geeigneten Stelle der Erntegutaufnahmeeinrichtung oder der Erntemaschine mißt. Auch ein Sensor, der die Belastung der Erntegutaufnahmeeinrichtung erfaßt, also z. B. das Drehmoment oder die Leistungsaufnahme eines Antriebs der Erntegutaufnahmeeinrichtung mißt, wäre verwendbar. Ein Verstopfen kann auch durch ein Durchdrehen einer Rutschkopplung in der Antriebseinrichtung der Erntegutaufnahmeeinrichtung signalisiert werden, das mittels eines geeigneten Rotationssensors nachweisbar ist. Bei Unteroder Überschreiten eines bestimmten Schwellenwertes des Ausgangssignals des Sensors gibt die Nachweiseinrichtung ein Signal ab, das eine Verstopfung anzeigt.

Eine Nachweiseinrichtung, die das Eindringen unerwünschter Materialien in die Erntegutaufnahmeeinrichtung feststellt, ist insbesondere ein an sich bekannter Metalldetektor, der ferromagnetische Materialien nachweist und die Zuführeinrichtungen der Erntemaschine gegebenenfalls sofort blockiert und anhält. Das Ausgangssignal des Metalldetektors kann unmittelbar weiterverarbeitet werden, oder es wird (da bei Blockieren der Zuführeinrichtung durch den Metalldetektor eine Rutschkopplung durchdreht) der Blockierungszustand der Zuführeinrichtung durch geeignete Rotations- oder Klopfsensoren erfaßt.

Die Erfindung ist insbesondere an Mähdreschern und selbstfahrenden oder gezogenen Feldhäckslern verwendbar.

In den Zeichnungen sind nachfolgend näher beschriebene Ausführungsbeispiele der Erfindung dargestellt. Es zeigt:
- Fig. 1: einen Mähdrescher mit einer erfindungsgemäßen Steuerung,
- Fig. 2: eine Seitenansicht einer Erntegutaufnahmeeinrichtung für den Mähdrescher der Figur 1,
- Fig. 3: eine Draufsicht auf die Erntegutaufnahmeeinrichtung der Figur 2,
- Fig. 4: ein Blockschaltbild der Steuerung des Mähdreschers der Figur 1,
- Fig. 5: einen Feldhäcksler mit einer erfindungsgemäßen Steuerung,
- Fig. 6: ein Blockschaltbild der Steuerung des Feldhäckslers der Figur 5, und
- Fig. 7: ein Flußdiagramm der Steuerung.

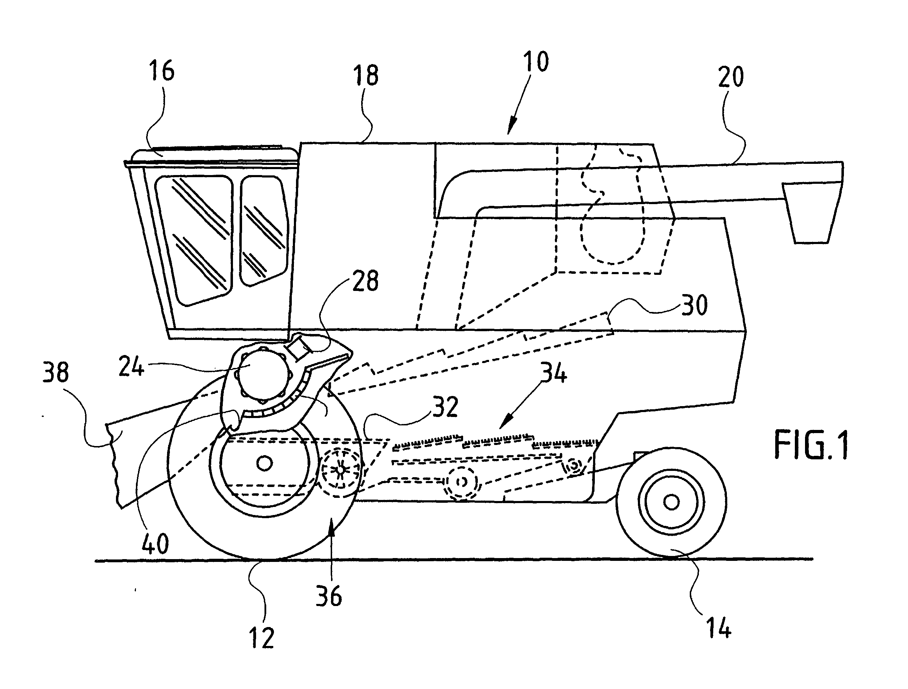

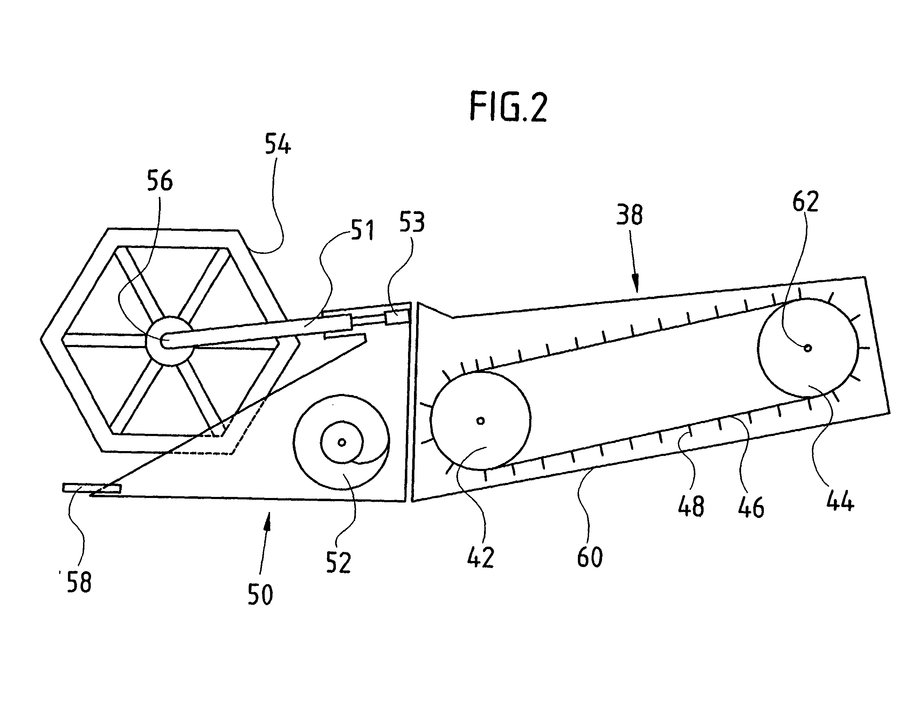

Eine in Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einer Bedienungsperson bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer in Figur 2 gezeigten Erntegutaufnahmevorrichtung 50 vom Boden aufgenommen worden ist.

Die in Figur 2 wiedergegebene Erntegutaufnahmevorrichtung 50 ist an der in Vorwärtsfahrtrichtung des Mähdreschers 10 vorderen Fläche des Schrägförderers 38 lösbar befestigt, in der Regel eingehängt. Die Erntegutaufnahmeeinrichtung 50 ist mit einer Schneideinrichtung 58 zum Abtrennen von Erntegut (insbesondere Getreide) vom Erdboden ausgestattet. Das abgeschnittene Erntegut wird mittels einer im Gegenuhrzeigersinn um eine Achse 56 rotativ angetriebenen Haspel 56 einer Schnecke 52 zugeführt, die das Erntegut dem Schrägförderer 38 zuleitet. Die Haspel ist über eine Teleskopstange 51 und einen Hydraulikzylinder 53, anstelle dessen auch ein entsprechend gesteuerter Elektromotor verwendbar wäre, in ihrer Position verstellbar; sie kann mittels des Hydraulikzylinders 53 von einer normalen Betriebsstellung, in der Erntegut eingezogen wird, in eine Außerbetriebsstellung, in der verstopftes Erntegut durch Reversieren des Schrägförderers 38 und der Schnecke 52 und der Haspel 54 wieder ausgeworfen werden kann, verbracht werden. In der Außerbetriebsstellung ist die Haspel 54 weiter von der Schnecke 52 beabstandet als in der Betriebsstellung. Der Schrägförderer 38 weist ein Gehäuse 60 auf, in dem eine endlose Förderkette 46 mit Einzugsleisten 48 um eine untere Schrägfördererwalze 42 und eine obere Schrägfördererwalze 44 umläuft. Letztere wird über ihre Welle 62 rotativ angetrieben. Die Förderkette 46 mit den Einzugsleisten 48 fördert das eingebrachte Erntegut unterschlächtig in den Mähdrescher 10 hinein.

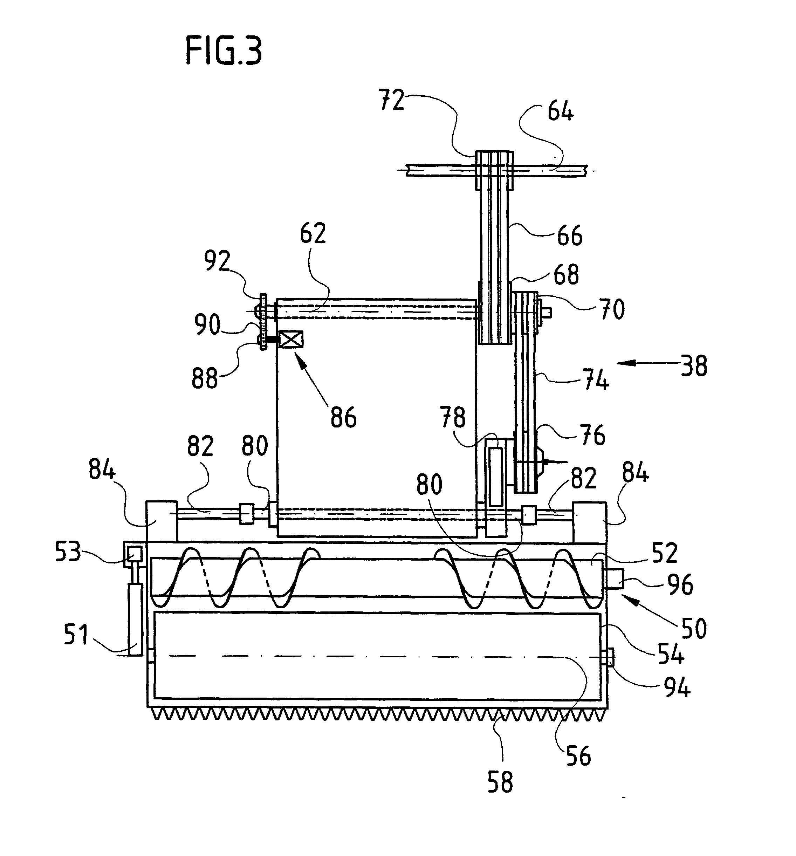

Anhand der in Figur 3 wiedergegebenen Draufsicht auf den Schrägförderer 38 und die Erntegutaufnahmeeinrichtung 50 ist der Antrieb der einzelnen Elemente erkennbar. Von einem nicht eingezeichneten Motor des Mähdreschers 10 wird (in der Regel indirekt) eine Welle 64 angetrieben, die die Welle der Dreschtrommel 24 oder des Wendekorbs 26 sein kann. Auf der Welle 64 ist eine Riemenscheibe 72 befestigt, über die ein dreifacher Riemen 66 läuft. Der Riemen 66 läuft außerdem um eine Riemenscheibe 68, die mit einer koaxialen Riemenscheibe 70 verbunden ist, um die ein weiterer Riemen 74 umläuft. Die Riemenscheiben 68 und 70 durchdringt die Welle 62 der oberen Schrägfördererwalze 44. Die Welle 62 ist am den Riemenscheiben 68, 70 gegenüberliegenden Ende über ein Kettenrad 92, eine Kette 90 und ein weiteres Kettenrad 88 mit einem Reversiermotor 86 verbunden. Innerhalb der Riemenscheibe 72 ist eine Elektrokupplung angeordnet, mit der die Riemenscheibe 72 von der Welle 64 an- und abkoppelbar ist. Auch das Kettenrad 92 an der Welle 62 der oberen Schrägfördererwalze 44 ist mit einer Elektrokupplung ausgestattet, mit der es an die Welle 62 anund von ihr abkoppelbar ist. Der Riemen 74 läuft um eine am (in Vorwärtsfahrtrichtung des Mähdreschers 10) vorderen Ende des Schrägförderers 38 positionierte Riemenscheibe 76 um, die ihrerseits ein Kettengetriebe 78 antreibt. Das Kettengetriebe 78 treibt eine Sechskantwelle, die beidseits des Schrägförderers 38 lösbar mit Schneidwerksantriebswellen 82 verbunden ist. Die Schneidwerksantriebswellen 82 sind über Getriebe 84 mit der Schneideinrichtung 58 verbunden. Die Achse 56 der Haspel 54 ist mittels eines Hydraulikmotors 94 antreibbar, und die Schnecke 52 ist ebenfalls mit einem Hydraulikmotor 96 in Drehung versetzbar.

Im normalen Erntebetrieb ist die Elektrokupplung in der Riemenscheibe 72 eingeschaltet, und der Motor des Mähdreschers 10 treibt die Welle 62 der oberen Schrägfördererwalze 44 über den Riemen 66 und die Riemenscheibe 68 an. Auch die Schneideinrichtung 38 wird durch den Motor über die - mit der Riemenscheibe 68 verbundene - Riemenscheibe 70, den Riemen 74, die Riemenscheibe 76, das Kettengetriebe 78, die Sechskantwelle 80, die Schneidwerksantriebswelle 82 und das Getriebe 84 an. Die Schnecke 52 wird durch den Hydraulikmotor 96 angetrieben, und die Haspel 54 durch den Hydraulikmotor 94. Die Elektrokupplung im Kettenrad 92 ist ausgeschaltet, so daß keine Antriebsverbindung zwischen dem Reversiermotor 86 und der Welle 62 der oberen Schrägfördererwalze 44 besteht. Beim Reversierbetrieb, d.h. falls verstopftes Erntegut auszustoßen ist, ist die Elektrokupplung in der Riemenscheibe 72 ausgeschaltet, und die Elektrokupplung im Kettenrad 92 eingeschaltet. Der Reversiermotor 86 treibt dann die Förderkette 46 des Schrägförderers 38 in umgekehrter (reversierter) Richtung an, während die Hydraulikmotoren 94, 96 ebenfalls in umgekehrter Richtung betrieben werden. Dieser Reversierbetrieb ist als solcher bekannt und bedarf daher keiner näheren Erläuterung.

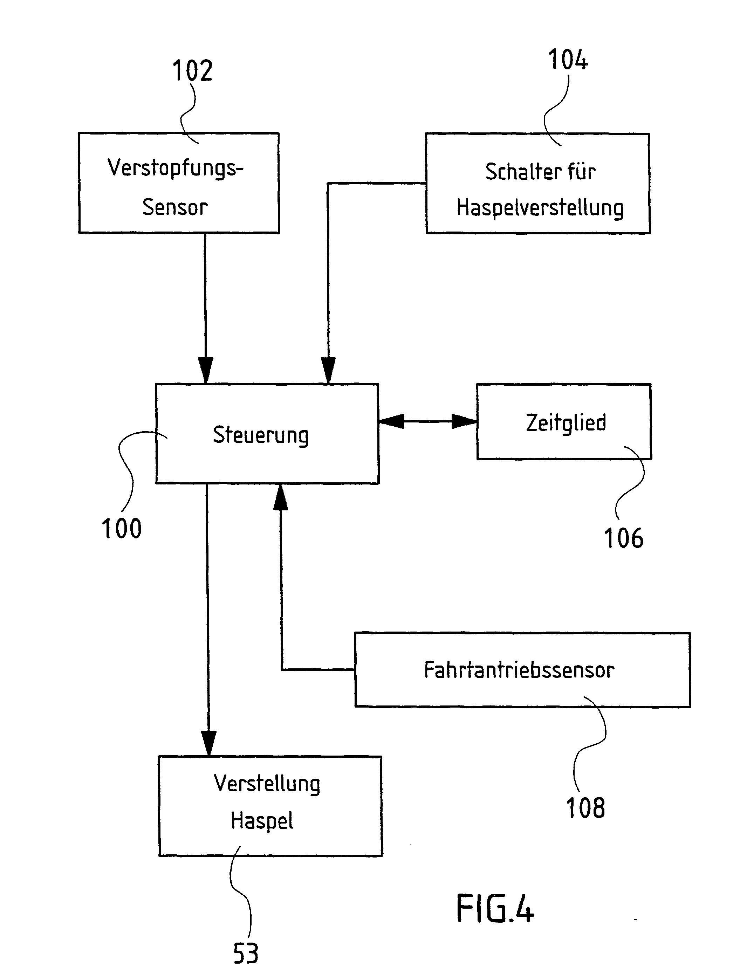

Erfindungsgemäß ist die in Figur 4 wiedergegebene Steuerschaltung im Mähdrescher 10 vorgesehen. Eine Steuerung 100, die ein separater Mikroprozessor oder -controller sein kann, oder ein Teil der Steuerelektronik des Mähdreschers 10 ist, ist mit einem Verstopfungssensor 102, einem Schalter 104 zur Eingabe der Position der Haspel, einem Zeitglied 106 und einem Fahrtantriebssensor 108 verbunden. Außerdem steuert die Steuerung 100 über geeignete elektrische und/oder mechanische Einrichtungen den Hydraulikzylinder 53, der zur Höhenverstellung der Haspel 54 dient. Als Verstopfungssensor 102 kann beispielsweise ein Drehmomentsensor an der Welle 62 der oberen Schrägfördererwalze 44 vorgesehen sein. Der Schalter 104 ist in der Fahrerkabine 16 im Einflußbereich der Bedienungsperson angeordnet, beispielsweise im Armaturenbrett, einem Bedienhebel, einer Konsole oder dergleichen. Der Schalter 104 weist eine Außerbetriebsposition auf, in der die Haspel 54 in ihrer zum Reversieren und Auswerfen verstopften Ernteguts geeignete Außerbetriebsstellung zu verbringen ist, und eine Betriebsposition, in der die Haspel 54 ihre Betriebsstellung zum Erntebetrieb einnimmt. Der Fahrtantriebssensor 108 ist mit einem der Räder 12 oder 14 verbunden und gibt eine entsprechende Information an die Steuerung 100 ab, wenn der Mähdrescher 10 vorwärts getrieben wird. Das Zeitglied 106 wird durch die Steuerung 100 getriggert und gibt ein nach dem Ablauf einer vorbestimmten Zeitdauer ein entsprechendes Signal an die Steuerung ab.

Der Funktionsablauf der Steuerung 100 ist derart, daß der Hydraulikzylinder 53 dann in die Außerbetriebsstellung der Haspel 54 verbracht wird, wenn der Schalter 104 in Außerbetriebsposition ist. Ist der Schalter 104 in Betriebsposition, wird geprüft, ob der Verstopfungssensor 102 eine Verstopfung anzeigt. Wenn das nicht der Fall ist, wird der Hydraulikzylinder 53 aktiviert und verbringt die Haspel 54 in Betriebsstellung. Zeigt der Verstopfungssensor 102 eine Verstopfung an, verbleibt die Haspel 54 in Außerbetriebsstellung, und der Bedienungsperson wird über eine entsprechende Anzeigeeinrichtung eine Störung angezeigt. Wenn der Verstopfungssensor 102 während des Erntebetriebs, also bei bereits in Betriebsstellung befindlicher Haspel 54 eine Verstopfung nachweist, wird das Zeitglied 106 aktiviert. Nachdem das Zeitglied 106 der Steuerung 100 den Ablauf der vorbestimmten Zeitspanne, beispielsweise einige Sekunden, signalisiert, prüft die Steuerung, ob der Fahrtantriebssensor 108 während der gesamten Zeitspanne signalisiert hat (oder gerade jetzt signalisiert), daß der Mähdrescher 10 vorwärts fährt. Wenn das der Fall ist, verbleibt die Haspel 54 in der Betriebsstellung, anderenfalls wird sie in die Außerbetriebsstellung verfahren. Die Bedienungsperson kann somit gegebenenfalls einfach durch Weiterfahren das selbsttätige Verbringen der Haspel 54 in die Außerbetriebsstellung unterbinden, wenn ein Reversieren nicht notwendig erscheint. Auch durch einmaliges Betätigen (Aus- und Einschalten) des Schalters 104 innerhalb der Zeitdauer kann die Außerbetriebsetzung der Haspel 54 unterbunden werden. Weiterhin ist denkbar, die Haspel 54 durch die Steuerung 100 wieder in Betriebsstellung zu versetzen, wenn der Fahrtantriebssensor 108 ein das Vorwärtsfahren anzeigendes Signal abgibt, nachdem die Steuerung 100 durch den Verstopfungssensor 102 veranlaßt wurde, die Haspel 54 in die Außerbetriebsstellung zu verbringen.

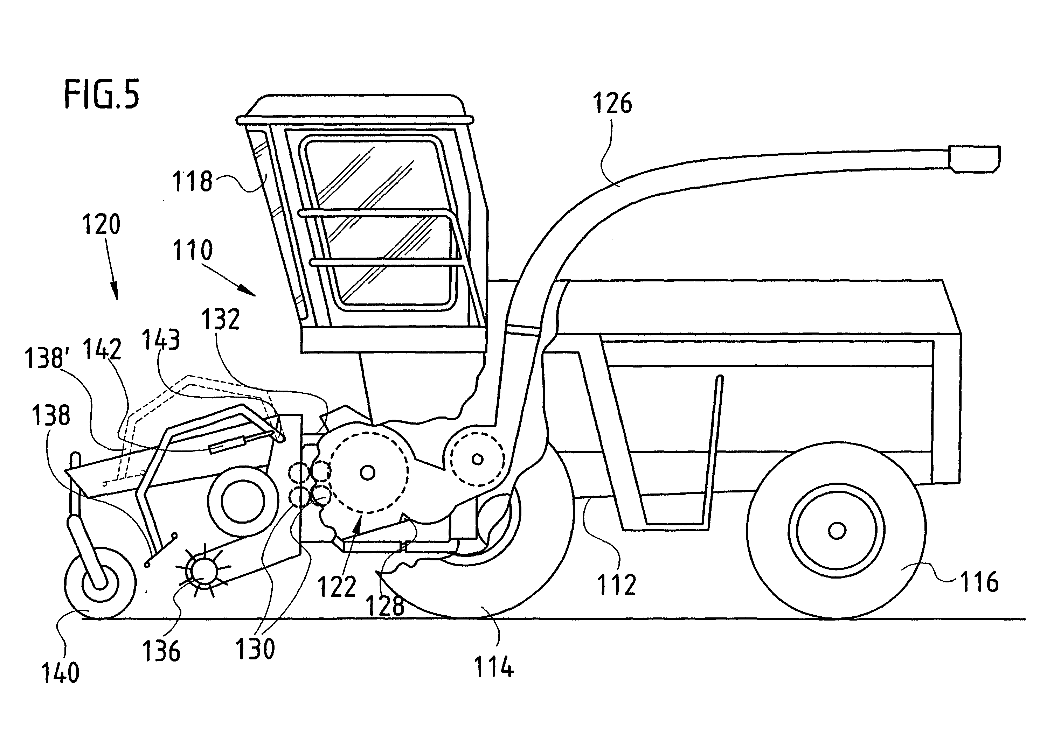

In Figur 5 ist eine Erntemaschine in der Art eines selbstfahrenden Feldhäckslers 110 dargestellt, in der eine Steuerung 100 nach einer zweiten Ausführungsform der Erfindung vorgesehen ist. Der Feldhäcksler 110 baut sich auf einem Rahmen 112 auf, der von vorderen und rückwärtigen Rädern 114 und 116 getragen wird. Die Bedienung des Feldhäckslers 110 erfolgt von einer Fahrerkabine 118 aus, von der aus eine Erntegutaufnahmevorrichtung 120 einsehbar ist. Mittels der Erntegutaufnahmevorrichtung 120 vom Boden aufgenommenes Gut, z. B. Mais, Gras oder dergleichen wird über Zuführwalzen 130, die innerhalb eines Einzugsgehäuses 132 angeordnet sind, einer Häckseltrommel 122 zugeführt, die es in kleine Stücke häckselt und es einer Fördervorrichtung 124 aufgibt. Das Gut verläßt den Feldhäcksler 110 zu einem nebenher fahrenden Anhänger über einen drehbaren Austragsschacht 126. Zwischen der Häckseltrommel 122 und der Fördervorrichtung 124 erstreckt sich eine Nachzerkleinerungsvorrichtung 128, durch die das zu fördernde Gut der Fördervorrichtung 124 tangential zugeführt wird.

Die Erntegutaufnahmevorrichtung 120 ist in diesem Ausführungsbeispiel als sogenannte Pick-up ausgebildet und als selbständige Einheit ausgestaltet. Allerdings könnte es sich bei dieser Erntegutaufnahmevorrichtung 120 ebenso um ein Zusatzaggregat handeln, das z.B. an den Frontbereich eines Schneidwerks eines Mähdreschers angeflanscht wird. Die Erntegutaufnahmevorrichtung 120 stützt sich über Stützräder 140 auf dem Erdboden ab. Die Aufgabe der Erntegutaufnahmevorrichtung 120 besteht darin, auf dem Boden in Schwaden abgelegtes Erntegut verschiedenster Art und Beschaffenheit aufzunehmen und es dem Feldhäcksler 110 zur weiteren Bearbeitung zuzuführen. Hierzu wird die Erntegutaufnahmeeinrichtung 120 während des Erntebetriebes mit geringem Abstand zum Erdboden über das Feld bewegt, während sie zum Transport auf einer Straße oder auf Wegen angehoben wird. Zu der Erntegutaufnahmevorrichtung 120 gehört eine Fördervorrichtung 134 in Form einer Förderschnecke, die auf an sich bekannte Weise das aufgenommene Gut von den Seiten der Erntegutaufnahmevorrichtung 120 zu einer in der Mitte gelegenen, nicht gezeigten Abgabeöffnung fördert, hinter der die Zuführwalzen 130 folgen, ein wie die Fördervorrichtung rotativ angetriebenen Aufnehmer 136, der unterhalb der Fördervorrichtung 134 angeordnet ist und mit seinen Förderzinken das Gut vom Erdboden anhebt, um es der Fördervorrichtung 134 zu übergeben, und ein Niederhalter 138 in Form eines über dem Aufnehmer 136 angeordneten Bleches. Alternativ könnte der Niederhalter 138 walzenförmig sein oder mehrere Stäbe aufweisen. Die Achsen der Fördervorrichtung 134 und des Aufnehmers 136 verlaufen parallel zueinander und zum Erdboden und quer zur Fahrtrichtung des Feldhäckslers 110. Die relative Lage der Fördervorrichtung 134 zum Aufnehmer 136 ist unveränderlich. Die Position des Niederhalters 138 kann zwischen der Betriebsstellung, in der der Niederhalter 138 in Figur 5 mit durchgehenden Linien gezeichnet ist, und in der der Niederhalter 138 mit dem Aufnehmer 136 zusammenwirkt, und einer Außerbetriebsstellung, in der der Niederhalter mit dem Bezugszeichen 38' gekennzeichnet ist, verstellt werden. Dazu dient ein Hydraulikzylinder 142 (der auch durch einen Elektomotor ersetzt werden könnte), der den Niederhalter 138 entsprechend um eine horizontale, quer zur Fahrtrichtung des Feldhäckslers 110 verlaufende Achse 143 dreht. Die Außerbetriebsstellung des Niederhalters 138' erweist sich im Reversierbetrieb, in dem die Zuführwalzen 130, die Aufnahmeeinrichtung 134 und der Aufnehmer 136 (optional auch die Häckseltrommel 122) in gegenüber normalem Erntebetrieb umgekehrter Drehrichtung betrieben werden, als notwendig, um verstopftes Material auswerfen zu können. Das Reversieren geschieht in an sich bekannter Weise mit zugeordneten Reversiermotoren. Auch wenn ein innerhalb einer der Zuführwalzen 130 angeordneter, nicht eingezeichneter Metalldetektor anspricht, und den Antrieb der Zuführwalzen 130 abschaltet, ist ein Reversieren notwendig.

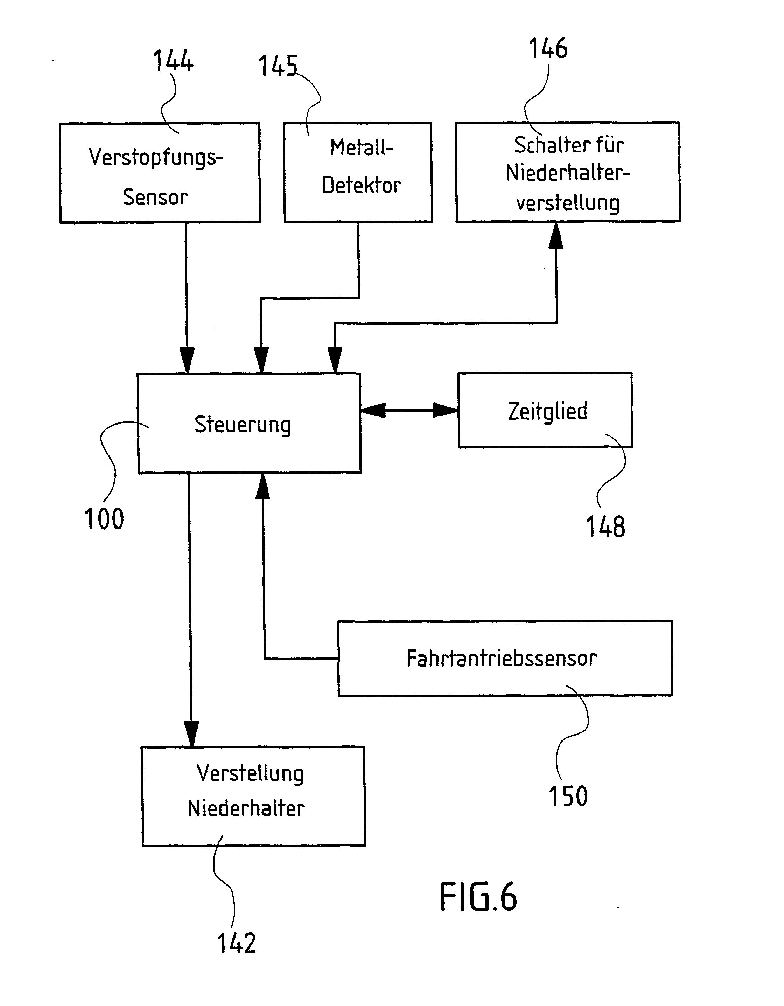

In Figur 6 ist ein Prinzipschaltbild einer Steuerungsschaltung für den Hydraulikzylinder 142 zur Verstellung des Niederhalters 138 dargestellt. Eine Steuerung 100 ist mit einem Verstopfungssensor 144, dem bereits erwähnten, stationär im Inneren einer Zuführwalze 130 angeordneten Metalldetektor 145, einem in der Fahrerkabine 118 angebrachten Schalter 146 für die Eingabe der gewünschten Position des Niederhalters 138, einem Zeitglied 148, einem Fahrtantriebssensor 150 und dem Hydraulikzylinder 142 verbunden. Die Steuerung 100 kann ein separater Mikroprozessor oder -controller sein, oder ein Teil der elektronischen Steuerung des Feldhäckslers 110. Der Verstopfungssensor 144 erfaßt, ob die Zuführwalzen 130 oder die Häckseltrommel durch im Übermaß zugeführtes Erntegut blockiert sind. Er mißt daher das Antriebsdrehmoment einer der Zuführwalzen 130 und/oder der Häckseltrommel 122, und gibt bei Überschreiten eines Schwellenwertes ein entsprechendes Signal an die Steuerung 100 ab, die letztere als Verstopfung interpretiert. Der Metalldetektor 145 ist an sich bekannt, und bedarf daher keiner näheren Erläuterung. Er sendet ein entsprechendes Signal an die Steuerung 100, falls ferromagnetisches Material an den Einzugswalzen 130 vorbeigeführt wird, welches die Häckseltrommel 122 beschädigen könnte. Außerdem blockiert der Metalldetektor 145 im Falle eines Ansprechens auch die Zuführwalzen 130 mechanisch. Der Schalter 146 ist innerhalb der Fahrerkabine 118 für eine Bedienungsperson leicht erreichbar im Armaturenbrett, einem Bedienhebel, einer Konsole oder dergleichen angeordnet, und weist eine Betriebsposition auf, in der der Niederhalter 138 in die Betriebsstellung zu verbringen ist. Der Schalter 146 weist außerdem noch eine Außerbetriebsstellung auf, in der der Niederhalter 138 in seine Außerbetriebsstelllung zu verbringen ist. Das Zeitglied 148 kann durch die Steuerung 100 getriggert werden, und gibt nach dem Ablauf eines bestimmten Zeitintervalls (von einigen Sekunden) ein entsprechendes Signal an die Steuerung 100 ab. Der Fahrtantriebssensor 150 ist mit einem der Räder 114, 116 verbunden und beaufschlagt die Steuerung mit einem Signal, das eine Information darüber enthält, ob der Feldhäcksler 110 vorangetrieben wird. Die Steuerung 100 steuert über geeignete elektronische, mechanische und/oder hydraulische Bauteile den Hydraulikzylinder 142 zur Verstellung der Position des Niederhalters 138.

Die Funktion der Steuerung ist im wesentlichen identisch mit der in Figur 4 dargestellten. Ein Unterschied besteht darin, daß nicht nur das Ansprechen des Verstopfungssensors 144 (102 in Figur 4), sondern auch des Metalldetektors 145 zum Anstoßen des Zeitgliedes 148 führt. Nach dem Ablauf des Zeitgliedes wird der Niederhalter 138 durch den Hydraulikzylinder 142 abhängig davon, ob der Fahrtantriebssensor 150 während des gesamten Laufens des Zeitgliedes ein Vorwärtsfahren detektierte, und ob der Schalter 146 für die Niederhalterverstellung aktiviert wurde, in die Außerbetriebsstellung verfahren, oder nicht.

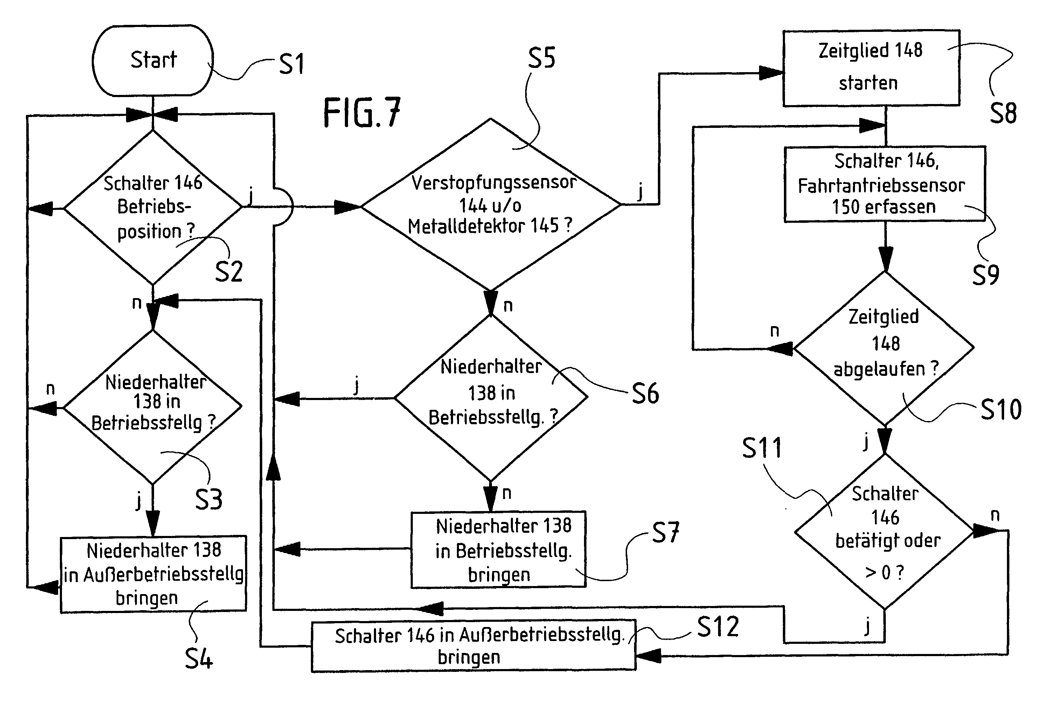

Ein Flußdiagramm zur Verdeutlichung der Funktionsweise der Steuerung der Figur 6 ist in Figur 7 wiedergegeben. Nach dem Start in Schritt S1, also beispielsweise dem Starten des Feldhäckslers 110, wird zunächst in S2 geprüft, ob der Schalter 146 in Betriebsposition ist. Ist das Ergebnis nein, wird in S3 untersucht, ob der Niederhalter 138 in Betriebsstellung ist; das kann durch einen geeigneten Sensor oder durch das Abfragen eines Speichers, in dem die letzte bekannte Soll- oder IstStellung des Niederhalters 138 abgelegt ist, geschehen. Ist der Niederhalter 138 nicht in Betriebsstellung, folgt wieder Schritt S2. Anderenfalls wird der Niederhalter 138 in Schritt S4 in Außerbetriebsstellung gebracht, was durch Aktivierung des Hydraulikzylinders 142 geschieht. Darauf folgt wieder Schritt S2. Hat Schritt S2 ergeben, daß der Schalter 146 in Betriebsposition ist, folgt Schritt S5, in dem geprüft wird, ob der Verstopfungssensor 144 und/oder der Metalldetektor 145 angesprochen hat. Wenn das nicht der Fall ist, folgt Schritt S6, in dem (in der oben beschriebenen Weise) untersucht wird, ob der Niederhalter 138 in Betriebsstellung ist. Ist das der Fall, folgt wieder Schritt S2, sonst folgt Schritt S7, in dem der Niederhalter 138 mittels des Hydraulikzylinders 142 in Betriebsstellung verbracht wird, woraufhin wieder Schritt S2 folgt. Hat in Schritt S5 der Verstopfungssensor 144 und/oder der Metalldetektor 145 angesprochen, wird in Schritt S8 das Zeitglied 148 gestartet, in Schritt S9 geprüft, ob der Schalter 146 betätigt wird und das Ausgangssignal des Fahrtantriebssensors 150 erfaßt, und in Schritt S10 abgefragt, ob das Zeitglied 148 abgelaufen ist. Wenn das nicht der Fall ist, folgt wieder Schritt S9, anderenfalls Schritt S11, in dem untersucht wird, ob der Schalter 146 betätigt wurde oder die Geschwindigkeit derzeit (oder während des gesamten Laufens des Zeitglieds 148) größer als Null ist. Wenn das Ergebnis ja ist, wird der Niederhalter 138 nicht angehoben und Schritt S2 folgt. Anderenfalls folgt Schritt S11, in dem der Schalter 146 (durch eine geeignete elektomechanische Einrichtung) in seine Außerbetriebsposition verbracht wird, und auf den wieder Schritt S3 folgt. Dann wird der Niederhalter 138 also in die Außerbetriebsstellung verbracht und auch der Schalter 146 wird in seine Außerbetriebsposition gestellt. Die Bedienungsperson kann die Verstopfung oder das eingedrungene Metall dann durch Reversieren der Einzugsorgane wieder beseitigen.

## Patentansprüche

1. Erntemaschine, mit einer Erntegutaufnahmeeinrichtung (50,120), die zur Beseitigung einer Verstopfung und/oder eingedrungener unerwünschter Materialien reversierbar ist, und die mit einem Zuführelement ausgestattet ist, dessen Position zwischen einer Betriebsstellung und einer Außerbetriebsstellung veränderbar ist, **dadurch gekennzeichnet, daß** eine mit einer Nachweiseinrichtung zur Detektion einer Verstopfung und/oder eingedrungener unerwünschter Materialien verbundene Steuerung (100) die Position des Zuführelements steuert.

2. Erntemaschine nach Anspruch 1, **dadurch gekennzeichnet, daß** die Steuerung (100) das Zuführelement in die Außerbetriebsstellung verbringt, wenn die Nachweiseinrichtung anspricht.

3. Erntemaschine nach Anspruch 1 oder 2, **dadurch gekennzeichnet, daß** die Steuerung (100) zusätzlich mit einem ersten Bedienelement (104,146) zur Eingabe der Position des Zuführelements verbunden ist und das Zuführelement auch dann in die Außerbetriebsstellung verbringt, wenn das erste Bedienelement (104,146) in einer Außerbetriebsposition ist.

4. Erntemaschine nach Anspruch 3, **dadurch gekennzeichnet, daß** das erste Bedienelement (146) selbsttätig von einer Betriebsposition in eine Außerbetriebsposition verbracht wird, falls die Nachweiseinrichtung anspricht.

5. Erntemaschine nach einem der Ansprüche 1 bis 4, **dadurch gekennzeichnet, daß** die Steuerung (100) das Zuführelement nach dem Ansprechen der Nachweiseinrichtung erst nach Ablauf eines bestimmten Zeitintervalls in die Außerbetriebsstellung verbringt.

6. Erntemaschine nach Anspruch 5, **dadurch gekennzeichnet, daß** die Steuerung (100) das Zuführelement nicht in die Außerbetriebsstellung verbringt, wenn innerhalb des Zeitintervalls ein Bedienelement (104,146), insbesondere ein zweites Bedienelement, betätigt oder nicht betätigt wird.

7. Erntemaschine nach einem der Ansprüche 1 bis 6, **dadurch gekennzeichnet, daß** die Steuerung (100) mit einem Vortriebssensor (108, 150) verbunden ist und bei Ansprechen der Nachweiseinrichtung (102, 144, 145) das Zuführelement nur dann in die Außerbetriebsstellung verbringt, falls die Erntemaschine insbesondere für eine bestimmte Zeitdauer nicht in Vorwärtsrichtung vorangetrieben wurde und/oder wird.

8. Erntemaschine nach einem der Ansprüche 1 bis 7, **dadurch gekennzeichnet, daß** die Steuerung (100) mit einem Vortriebssensor (108, 150) verbunden ist und nach Ansprechen der Nachweiseinrichtung das Zuführelement aus der Außerbetriebsstellung wieder in die Betriebsstellung verbringt, falls die Erntemaschine in Vorwärtsrichtung vorangetrieben wird.

9. Erntemaschine nach einem der vorhergehenden Ansprüche, **dadurch gekennzeichnet, daß** das Zuführelement in der Außerbetriebsstellung in einer zum Auswerfen aufgenommenen Materials geeigneten Position ist.

10. Erntemaschine nach einem der vorhergehenden Ansprüche, **dadurch gekennzeichnet, daß** das Zuführelement eine Haspel (54) oder ein Niederhalter (138) ist.

11. Erntemaschine nach einem der vorhergehenden Ansprüche, **dadurch gekennzeichnet, daß** die Nachweiseinrichtung einen Metalldetektor (145) und/oder einen Sensor (102,144) für die Menge eingebrachten Ernteguts aufweist, insbesondere für die Belastung der Erntegutaufnahmeeinrichtung (50, 120).

12. Erntemaschine nach einem der vorhergehenden Ansprüche, **dadurch gekennzeichnet, daß** sie ein Mähdrescher (10) oder ein Feldhäcksler (110) oder ein gezogenes Gerät ist.

## Claims

1. A harvesting machine with a crop receiving device (50, 120), which can be reversed to eliminate a jam and/or penetrating undesirable materials, and with a feed element whose position can be varied between an operating position and an out of operation position, **characterized in that** a controller (10) connected to a detector device for detecting a jam and/or penetrating undesirable material controls the position of the feed element.

2. A harvesting machine according to claim 1, **characterized in that** the controller (100) brings the feed element into the out of operation position when the detector device reacts.

3. A harvesting machine according to claim 1 or 2, **characterized in that** the controller (100) is additionally connected to a first operating element (104, 146) for entering the position of the feed element and also brings the feed element into the out of operation position when the first operating element (104, 146) is in an out of operation position.

4. A harvesting machine according to claim 3, **characterized in that** the first operating element (146) is automatically brought from an operating position into an out of operation position should the detector device react.

5. A harvesting machine according to any of claims 1 to 4, **characterized in that** the controller (100) brings the feed element into the out of operation position following reaction of the detector device only after elapse of a certain interval of time.

6. A harvesting machine according to claim 5, **characterized in that** the controller (100) does not bring the feed element into the out of operation position when an operating element (104, 146), especially a second operating element is actuated or not actuated within the interval of time.

7. A harvesting machine according to any of claims 1 to 6, **characterized in that** the controller (100) is connected to a driving sensor (108, 150) and only brings the feed element into the out of operation position on reaction of the detector device (102, 144, 145) should the harvesting machine not have been and/or not be driven in the forwards direction for a certain interval of time.

8. A harvesting machine according to any of claims 1 to 7, **characterized in that** the controller (100) is connected to a driving sensor (108, 150) and brings the feed element out of the out of operation position into the operating position again after reaction of the detector device should the harvesting machine be driven in the forwards direction.

9. A harvesting machine according to any of the preceding claims, **characterized in that** the feed element is in a position adapted to ejection of received material in the out of operation position.

10. A harvesting machine according to any of the preceding claims, **characterized in that** the feed element is a reel (54) or a hold down (138).

11. A harvesting machine according to any of the preceding claims, **characterized in that** the detector device comprises a metal detector (145) and/or a sensor for the amount of crop fed in, especially for the loading of the crop receiving device (50, 120).

12. A harvesting machine according to any of the preceding claims, **characterized in that** it is a combine harvester (10) or a forage harvester (110) or a towed implement.

## Revendications

1. Moissonneuse agricole comportant un dispositif de réception du produit récolté (50, 120) qui, pour supprimer un bourrage et/ou des matières indésirables ayant pénétré, est réversible, et qui est équipée d'un élément d'amenée dont la position est variable entre une position de fonctionnement et une position hors service, **caractérisée en ce qu'**une commande (100) reliée avec un dispositif de détection pour détecter un bourrage et/ou des matières indésirables ayant pénétré commande la position de l'élément d'amenée.

2. Moissonneuse agricole selon la revendication 1, **caractérisée en ce que** la commande (100) transfère l'élément d'amenée à la position hors service lorsque le dispositif de détection réagit.

3. Moissonneuse agricole selon la revendication 1 ou 2, **caractérisée en ce que** la commande (100) est, en outre, reliée avec un premier élément de commande (104, 146) pour entrer la position de l'élément d'amenée et qui transfère l'élément d'amenée à la position hors service lorsque le premier élément de commande (104, 146) est dans une position hors service.

4. Moissonneuse agricole selon la revendication 3, **caractérisée en ce que** le premier élément de commande (146) est transféré automatiquement d'une position de fonctionnement à une position hors service si le dispositif de détection réagit.

5. Moissonneuse agricole selon l'une des revendications 1 à 4, **caractérisée en ce que** la commande (100) transfère l'élément d'amenée à la position hors service, après la réaction du dispositif de détection, seulement après expiration d'un certain laps de temps.

6. Moissonneuse agricole selon la revendication 5, **caractérisée en ce que** la commande (100) ne transfère pas l'élément d'amenée à la position hors service si, durant le laps de temps, un élément de commande (104, 146), en particulier un deuxième élément de commande, est actionné ou n'est pas actionné.

7. Moissonneuse agricole selon l'une des revendications 1 à 6, **caractérisée en ce que** la commande (100) est reliée avec un capteur d'avancement (108, 150) et, en cas de réaction du dispositif de détection (102, 144, 145), transfère l'élément d'amenée à la position hors service si la moissonneuse agricole, en particulier pendant une certaine durée, n'a pas été et/ou ne sera pas avancée dans le sens avant.

8. Moissonneuse agricole selon l'une des revendications 1 à 7, **caractérisée en ce que** la commande (100) est reliée avec un capteur d'avancement (108, 150) et, après réaction du dispositif de détection, transfère l'élément d'amenée de la position hors service à nouveau à la position de fonctionnement, si la moissonneuse agricole est propulsée dans le sens avant.

9. Moissonneuse agricole selon l'une des revendications précédentes, **caractérisée en ce que** l'élément d'amenée est, à la position hors service, dans une position appropriée pour l'évacuation du produit recueilli.

10. Moissonneuse agricole selon l'une des revendications précédentes, **caractérisée en ce que** l'élément d'amenée est un treuil (54) ou un presse-matériel (138).

11. Moissonneuse agricole selon l'une des revendications précédentes, **caractérisée en ce que** le dispositif de détection présente un détecteur de métaux (145) et/ou un capteur (102, 144) pour la quantité de produit récolté ramassé, en particulier pour le chargement du dispositif de réception du produit récolté (50, 120).

12. Moissonneuse agricole selon l'une des revendications précédentes, **caractérisée en ce qu'**il s'agit d'une moissonneuse-batteuse (10) ou d'une ramasseuse-hacheuse (110) ou d'un appareil tracté.
